# EUROPEAN PATENT APPLICATION

(11) **EP 1 669 700 A1**
(43) Date of publication of application: **14.06.2006**
(21) Application number: 05026865.5
(22) Date of filing: 08.12.2005
(51) Int. Cl.: F25B 27/02

(54) **Cooling/heating apparatus using waste heat from fuel cell**

(30) Priority: 13.12.2004 KR 2004105035
(71) Applicant: LG Electronics, Inc., 151-721 seoul (KR)
(72) Inventor: Choi, Chang Min, 106-801 Kwannakdream Town, Seoul 151-055 (KR); Kang, Seung Tak, Seoul 153-010 (KR); Choi, Won Jae, Kwangjin-ku Seoul 143-210 (KR); Lim, Hyung Soo, Seocho-ku Seoul 137-069 (KR); Hwang, Yoon Jei, Yongsan-ku Seoul 140-031 (KR)
(74) Representative: Beyer, Andreas

(57) **Abstract**

Disclosed herein is a cooling/heating apparatus using waste heat from a fuel cell. The cooling/heating apparatus comprises a fuel cell (50), a hydrogen modifying unit (150), a cooling/heating unit (60), and refrigerant heating units. The cooling/heating unit (60) includes at least one compressor (61), a four-way valve (62), an outdoor heat exchanger (63), an expansion device (64), and an indoor heat exchanger (65), to establish a heat pump type refrigerant cycle. The refrigerant heating units provide waste heat recovered from the fuel cell (50) and the hydrogen modifying unit (150) to a suction-side refrigerant line (67 and 167) connected to the suction side of the compressor (61) included in the cooling/heating unit (60) to raise the temperature of a refrigerant. During a heating operation, the cooling/heating apparatus can achieve an enhancement in heating performance and an enhancement in system efficiency.

## Description

### BACKGROUND OF THE INVENTION

### Field of the Invention

The present invention relates to a cooling/heating apparatus using waste heat generated from a fuel cell, and, more particularly, to a cooling/heating apparatus in which waste heat generated from a fuel cell during a heating operation is supplied to the suction side of a compressor to achieve an enhancement in heating efficiency.

### Description of the Related Art

In general, fuel cells are electrochemical devices in which the chemical energy of fuel is converted directly into electrical energy via an electrochemical reaction. Considering the basic principle thereof, the fuel cells are adapted to produce electricity by oxidation of hydrogen obtained by modifying fossil fuels, such as petroleum or natural gas, or pure hydrogen. During the oxidation of hydrogen, heat and water vapor are generated as byproducts.

The fuel cells can be generally classified, in accordance with the kind of currently available electrolytes, into four types including phosphoric acid fuel cells (PAFC), molten carbonate fuel cells (MCFC), solid oxide fuel cells (SOFC), and proton exchange membrane fuel cells (PEMFC).

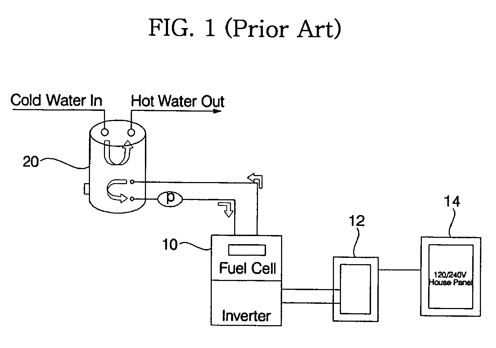

FIG. 1 is a schematic configuration diagram illustrating a conventional cogeneration system using waste heat from a fuel cell.

As shown in FIG. 1, the conventional cogeneration system includes a fuel cell 10, and a water tank 20 which provides cooling water to absorb heat generated from the fuel cell 10. The cooling water of the water tank 20 is adapted to circulate through the interior of the fuel cell 10, thereby serving to keep the interior temperature of the fuel cell 10 at an appropriate level and to recover waste heat from the fuel cell 10.

In succession, the heat, recovered from the fuel cell 10 using the cooling water, is accumulated in the water tank 20, and, finally, the resulting hot water is supplied to a domestic or building heating system, such as a hot-water supply source or a hot-water boiler.

In FIG. 1, reference numeral 12 designates a generator cutoff switch, and reference numeral 14 designates an electrical wiring provided in an electric appliance.

When it is desired to heat a confined space in winter, the conventional cogeneration system using the fuel cell 10 as stated above is adapted to utilize electricity generated from the fuel cell 10 or a boiler using the waste heat from the fuel cell 10.

In the case of using the boiler, however, there is a problem in that the scale of the cogeneration system excessively increases and requires additional costs for the driving of the boiler. On the other hand, in the case of using electricity, the cogeneration system suffers from degradation in overall system efficiency because the cogeneration system cannot use the waste heat from the fuel cell 10.

### SUMMARY OF THE INVENTION

Therefore, the present invention has been made in view of the above problems, and it is an object of the present invention to provide a cooling/heating apparatus in which waste heat generated from a fuel cell is supplied to a heating unit, which uses a refrigerant cycle, thereby achieving an enhancement in the recovery efficiency of the waste heat, and, consequently, an enhancement in heating performance.

In accordance with the present invention, the above and other objects can be accomplished by the provision of a cooling/heating apparatus using waste heat of a fuel cell comprising: the fuel cell; a cooling/heating unit which includes at least one compressor, a 4-way valve, an outdoor heat exchanger, an expansion device, and an indoor heat exchanger, to establish a heat pump type refrigerant cycle; and a refrigerant heating unit to provide the waste heat recovered from the fuel cell to a refrigerant line of the cooling/heating unit so as to raise the temperature of a refrigerant.

Preferably, the refrigerant heating unit may be configured to supply the waste heat to a suction-side refrigerant line connected to the suction side of the compressor.

Preferably, the refrigerant heating unit may include: a cooling water line to transfer the heat recovered from the fuel cell; and a heat accumulation tank to transfer the heat, supplied via the cooling water line, to the suction-side refrigerant line connected to the suction side of the compressor,

Preferably, the cooling water line may be provided with a temperature sensor and a flow rate sensor to measure the temperature and flow rate of cooling water, respectively, and is also provided with a cooling water pump to circulate the cooling water and a flow-rate control valve to adjust the flow rate of the cooling water.

Preferably, the heat accumulation tank may be connected to a line which receives the heat transferred via the cooling water line and supplies the heat to a heat demand unit.

Preferably, the suction-side refrigerant line, connected to the suction side of the compressor, may be provided with a bypass line and valves to cause the refrigerant to bypass the heat accumulation tank.

Preferably, the cooling/heating apparatus may further comprise: a hydrogen modifying unit to supply hydrogen to the fuel cell; and a refrigerant heating unit for the hydrogen modifying unit which supplies waste heat recovered from the hydrogen modifying unit 150 to a suction-side refrigerant line connected to the suction side of the compressor included in the cooling/heating unit.

Preferably, the refrigerant heating unit for the hydrogen modifying unit may include: a cooling water line to transfer the heat recovered from the hydrogen modifying unit; and a heat accumulation tank to transfer the heat, supplied via the cooling water line, to the suction-side refrigerant line connected to the suction side of the compressor.

Preferably, the cooling water line may be provided with a temperature sensor and a flow rate sensor to measure the temperature and flow rate of cooling water, respectively, and is also provided with a cooling water pump to circulate the cooling water and a flow-rate control valve to adjust the flow rate of the cooling water.

Preferably, the heat accumulation tank for the hydrogen modifying unit may be connected to a line which receives the heat transferred via the cooling water line and supplies the heat to a heat demand unit.

Preferably, the suction-side refrigerant line, connected to the suction side of the compressor, may be provided with a bypass line and a valve to cause the refrigerant to bypass the heat accumulation tank.

With the cooling/heating apparatus using the waste heat from a fuel cell, the waste heat generated from the fuel cell or hydrogen modifying unit during a heating operation is able to be supplied to the refrigerant line of the cooling/heating unit. Thereby, it is possible to achieve an enhancement in heating performance and an enhancement in overall system efficiency.

Further, since the cooling water can be supplied to the refrigerant line, in a state of being appropriately adjusted in the amount and temperature thereof in accordance with a load variation of the fuel cell or hydrogen modifying unit, it is possible to supply uniform heat to the refrigerant line, enabling an implementation of the heating operation.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic configuration diagram illustrating a conventional fuel cell system;
FIG. 2 is a schematic configuration diagram illustrating a cooling/heating apparatus using waste heat from a fuel cell according to a first embodiment of the present invention; and
FIG. 3 is a schematic configuration diagram illustrating a cooling/heating apparatus using waste heat from a fuel cell according to a second embodiment of the present invention.

### DESCRIPTION OF THE PREFERRED EMBODIMENTS

Hereinafter, exemplary embodiments of a cooling/heating apparatus using waste heat from a fuel cell according to the present invention will be explained with reference to the accompanying drawings.

Although a number of embodiments may be implemented for the cooling/heating apparatus using waste heat from a fuel cell according to the present invention, the following description will be given in conjunction with the most preferable embodiment.

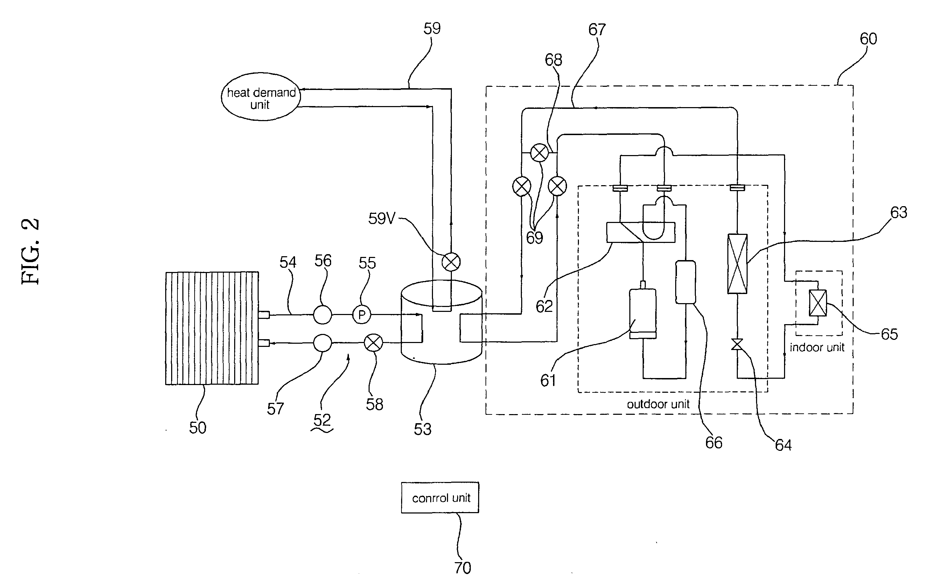

FIG. 2 is a schematic configuration diagram illustrating a cooling/heating apparatus using waste heat from a fuel cell according to a first embodiment of the present invention.

As shown in FIG. 2, the cooling/heating apparatus according to the first embodiment of the present invention comprises a fuel cell 50 taking the form of a stack of a plurality of cells. The fuel cell 50 is preferably formed of a proton exchange membrane fuel cell (PEMFC), but the present invention is not limited thereto, and, admittedly, other various kinds of fuel cells may be used.

The fuel cell 50 is adapted to generate heat by inducing an electrochemical reaction. In consideration of such a heat generation manner of the fuel cell 50, the cooling/heating apparatus of the present invention further comprises a cooling unit 52, which serves to cool the fuel cell 50 to thereby adjust the interior temperature of the fuel cell 50 to an appropriate level.

The cooling unit 52 includes a heat accumulation tank 53 in which heat exchange is performed, and a cooling water line 54 through which cooling water flows to transfer heat, recovered from the fuel cell 50, to the heat accumulation tank 53.

The heat accumulation tank 53 may be configured to store cooling water, which flows through the cooling water line 54, or may be configured to store a heat transfer fluid, which receives heat from the cooling water when it passes the cooling water line 54. Admittedly, the heat accumulation tank 53 may be made of a heat conductive material, such as metal, to heat exchange with the cooling water flowing through the cooling water line 54.

The cooling water line 54 has a pipe shape, and is configured to be inserted into the stack of the fuel cell 50, in the same manner as a conventional cooling water passage.

The cooling water line 54 is provided with a plurality of controllers to control the temperature of the cooling water in consideration of the fact that the fuel cell 50 has an excessive temperature variation. The cooling water line 54 is further provided with a cooling water pump 55 to circulate the cooling water, a temperature sensor 56 to measure the temperature of the cooling water, and a flow-rate sensor 57 to measure the flow rate of the cooling water. In addition, the cooling water line 54 is provided with a flow-rate control valve 58 to adjust the amount of the cooling water flowing through the cooling water line 54 in accordance with results sensed by the temperature sensor 56 and the flow-rate sensor 57.

The heat accumulation tank 53 is connected to a heat supply line 59, which receives heat transferred via the cooling water line 54, and supplies the heat to a certain heat demand place or heat demand unit. The heat-supply line 59 is provided with a valve 59V to open or close a fluid path. Here, the heat demand place or heat demand unit is selectable from among a variety of systems that require a heat source, such as a hot-water supply device or heating system.

The cooling/heating apparatus according to the first embodiment of the present invention further comprises a cooling/heating unit 60, which uses a heat pump type refrigerant cycle using waste heat generated from the fuel cell 50. The cooling/heating unit 60 includes at least one compressor 61, a 4-way valve 62, an outdoor heat exchanger 63, an expansion device 64, and an indoor heat exchanger 65 as in a general heat pump type cooling/heating apparatus which can be used as a heating unit in accordance with reversal of a refrigerant flow in a refrigerant cycle. For reference, reference numeral 66 designates an accumulator.

In particular, the cooling/heating apparatus further comprises a refrigerant heating unit adapted to supply the waste heat recovered from the fuel cell 50 to a refrigerant line of the cooling/heating unit 60 so as to raise the temperature of the refrigerant. In the present embodiment, the cooling unit 52 of the fuel cell 50 serves as the refrigerant heating unit. In this case, the refrigerant line of the cooling/heating unit 60 extends through the heat accumulation tank 53, so that the waste heat of the fuel cell 50 is transferred to the refrigerant line.

Preferably, the refrigerant line, which is adapted to receive the waste heat from the fuel cell 50, is a suction-side refrigerant line 67 connected to the suction side of the compressor 61, or a discharge-side refrigerant line connected to the discharge side of the compressor 61. In the illustrated embodiment of the present invention, the suction-side refrigerant line 67 connected to the suction side of the compressor 61 is adapted to receive the waste heat from the fuel cell 50.

The suction-side refrigerant line 67, connected to the suction side of the compressor 61, is provided with a bypass line 68 and valves 69, which allow the refrigerant to bypass the heat accumulation tank 53 during a cooling operation or in the case of overheating of the refrigerant.

The cooling/heating apparatus of the present invention further comprises a control unit 70 to automatically control the apparatus in accordance with the inputted operation condition and operational state. The control unit 70 is designed to receive signals from the temperature sensor 56 and the flow-rate sensor 57, and to control the cooling water pump 55, the flow-rate control valve 58, the valve 59V of the heat supply line 59, and the valves 69 of the cooling/heating unit 60, based on the signals. Admittedly, the control unit 70 may be configured to control the general control operations of both the fuel cell 50 and the cooling/heating unit 60.

Operation of the cooling/heating apparatus using the waste heat of the fuel cell according to the first embodiment of the present invention, having the above-described configuration, will now be described.

The cooling/heating apparatus according to the first embodiment of the present invention is able to obtain all energy, required to drive both the outdoor and indoor units during a heating operation in winter, from electricity and waste heat generated from the fuel cell 50. Here, as the waste heat from the fuel cell 50 is heat exchanged with the suction-side refrigerant line 67 connected to the suction side of the compressor 61, it is possible to achieve an enhancement in heating performance.

The electricity generated from the fuel cell 50 is used in elements requiring electricity, such as the compressor 61 or fan of the cooling/heating unit 60 and other various control equipment.

In the cooling/heating unit 60, a heating operation in winter is carried out as the refrigerant is circulated through the compressor 61, 4-way valve 62, indoor heat exchanger 65, expansion device 64, and outdoor heat exchanger 63, in this order. In this case, the refrigerant to be introduced into the compressor 61 via the suction-side refrigerant line 67 is pre-heated by the heat of the cooling water used to cool the fuel cell 50 while passing through the heat accumulation tank 53. The pre-heated refrigerant is then introduced into the compressor 61.

By pre-heating the refrigerant at the suction side of the compressor 61 using the waste heat from the fuel cell 50, the refrigerant is adapted to pass through the indoor heat exchanger 65 serving as a condenser, in a state of being maintained at a more or less increased temperature. Accordingly, heat of a higher temperature can be supplied to the room, so that it is possible to achieve an enhancement in heating performance.

In operation, the control unit 70 continuously controls the bypass line 68, the valves 69, the flow-rate control valve 58, and the valve 59V of the heat supply line 59 to supply uniform heat to the suction-side refrigerant line 67 connected to the suction side of the compressor 61. Thereby, it is possible to appropriately control the cooling operation of the fuel cell 50 and the operation of the cooling/heating unit 60.

As stated above, in the present invention, a proton exchange membrane fuel cell (PEMFC) is used as the fuel cell 50. In this case, although an operating temperature of the fuel cell 50 is 80 degrees, the interior of the fuel cell 50, in which a chemical reaction is practically induced, exhibits a temperature deviation of approximately 40 to 100 degrees. Also, the flow rate of the cooling water, which circulates in the fuel cell 50, must be changed to maintain the operating temperature of the fuel cell 50 at an appropriate level, in accordance with load of the fuel cell 50.

In the present invention, as the control unit 70 controls all of the valves 58, 59V, and 69 based on a variation in the flow rate of the cooling water in accordance with load of the fuel cell 50 and interior temperatures of the cooling water line 54 and the heat accumulation tank 53 sensed via the temperature sensor 56 and the flow-rate sensor 57, it is possible to supply uniform heat to the refrigerant line of the cooling/heating unit 60.

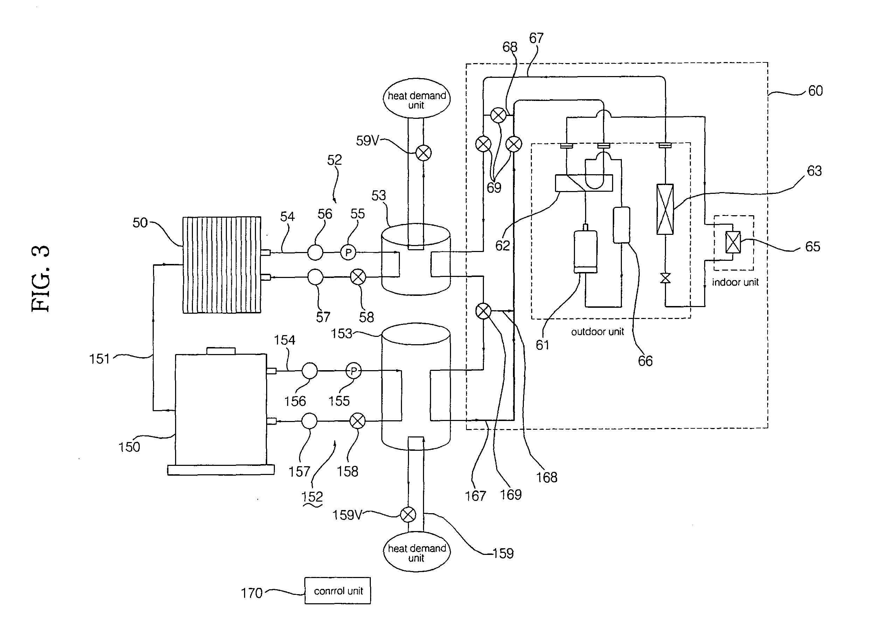

FIG. 3 is a schematic configuration diagram illustrating a cooling/heating apparatus using waste heat from a fuel cell according to a second embodiment of the present invention. For reference, constituent elements of the configuration shown in FIG. 3, identical to those of the configuration shown in FIG. 2, are designated by the same reference numerals as those of FIG. 2, respectively, and no description thereof will be given.

In general, fuel cells, such as solid oxide fuel cells (SOFC), molten carbonate fuel cells (MCFC), and proton exchange membrane fuel cells (PEMFC), utilize a hydrogen modifying unit which obtains hydrogen from fuel, such as methanol, liquefied natural gas, or natural gas. The cooling/heating apparatus according to the second embodiment of the present invention is configured so that waste heat generated from the hydrogen modifying unit 150 as well as the fuel cell 50 is supplied to a suction-side refrigerant line 167 connected to the suction side of the compressor 61, thereby achieving a further enhancement in heating performance.

Here, the hydrogen modifying unit 150 is connected to the fuel cell 50 via a hydrogen supply line 151.

The hydrogen modifying unit 150 is also connected to a modifying unit cooling unit 152, which is used to absorb heat generated during a hydrogen modifying operation of the hydrogen modifying unit 150.

The modifying unit cooling unit 152 includes a heat accumulation tank 153 in which heat exchange is performed, and a cooling water line 154 through which cooling water flows to transfer heat, recovered from the hydrogen modifying unit 150, to the heat accumulation tank 153.

The heat accumulation tank 153 for the hydrogen modifying unit 150 may have the same configuration as that of the heat accumulation tank 53 for the fuel cell 50 as stated above.

In the same manner as that of the fuel cell 50, the cooling water line 154 of the hydrogen modifying unit 150 is provided with a cooling water pump 155, a temperature sensor 156, a flow-rate sensor 157, and a flow-rate control valve 158.

The heat accumulation tank 153 is connected to a heat supply line 159, which receives heat transferred via the cooling water line 154, and supplies the heat to a certain heat demand place or heat demand unit.

In particular, the cooling/heating apparatus according to the second embodiment of the present invention further comprises a refrigerant heating unit for the hydrogen modifying unit 150. The refrigerant heating unit is adapted to supply the waste heat recovered from the hydrogen modifying unit 150 to the suction-side refrigerant line 167 connected to the suction side of the compressor 61 provided in the cooling/heating unit 60 so as to raise the temperature of the refrigerant. In the present embodiment, the modifying unit cooling unit 152 serves as the refrigerant heating unit. In this case, the refrigerant line of the cooling/heating unit 60 extends through the heat accumulation tank 153, so that the waste heat of the hydrogen modifying unit 150 is transferred to the refrigerant line.

Between the suction-side refrigerant lines 67 and 167, connected to the suction side of the compressor 61, a bypass line 168 and a valve 169 for the hydrogen modifying unit 150 are provided, so that the refrigerant, having passed through the heat accumulation tank 53 for the fuel cell 50, bypasses the heat accumulation tank 153 if necessary.

Also, the cooling/heating apparatus according to the second embodiment of the present embodiment further comprises a control unit 170 designed to control various elements associated with both the fuel cell 50 and the hydrogen modifying unit 150 based on signals inputted thereto.

Now, operation of the cooling/heating apparatus using the waste heat of the fuel cell according to the second embodiment of the present invention, having the above-described configuration, will be described.

In general, the operating temperature of the hydrogen modifying unit is approximately 600 degrees. Thus, the cooling/heating apparatus of the present embodiment is able to supply heat to the suction-side refrigerant line of the compressor during a heating operation in winter, using the waste heat generated from the hydrogen modifying unit, thereby achieving an enhancement in heating performance. Also, the cooling/heating apparatus of the present embodiment is able to supply heat, generated from both the heat accumulation tanks for the fuel cell and the hydrogen modifying unit, to a hot water supplier or other heating systems.

In this way, as the waste heat generated from the fuel cell 50 and the waste heat generated from the hydrogen modifying unit 150 are supplied to the respective refrigerant lines 67 and 167 connected to the compressor during a heating operation, and the control unit 170 controls all of valves 58, 59V, and 69 and 158, 159V, and 169 based on a variation in the flow rate of the cooling water and the interior temperatures of the cooling water lines 54 and 154 and the heat accumulation tanks 53 and 153 sensed by the temperature sensors 56 and 156 and the flow rate sensors 57 and 157, it is possible to supply an appropriate amount of heat to the refrigerant line of the cooling/heating unit 60, achieving an enhancement in heating performance.

As is apparent from the above description, the cooling/heating apparatus using waste heat of the fuel cell according to the present invention is configured so that waste heat generated from the fuel cell or hydrogen modifying unit is supplied to a refrigerant line of a cooling/heating unit during the heating operation, thereby achieving an enhancement in heating performance and an enhancement in system efficiency.

Also, in accordance with the present invention, the cooling water can be supplied to the refrigerant line, in a state of being appropriately adjusted in the amount and temperature thereof in accordance with a load variation of the fuel cell or hydrogen modifying unit. Accordingly, it is possible to supply uniform heat to the refrigerant line, enabling an implementation of the heating operation.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A cooling/heating apparatus using waste heat of a fuel cell (50) comprising:
the fuel cell (50);
a cooling/heating unit (60) which includes at least one compressor (61), a 4-way valve (62), an outdoor heat exchanger (63), an expansion device (64), and an indoor heat exchanger (65), to establish a heat pump type refrigerant cycle; and
a refrigerant heating unit to provide the waste heat recovered from the fuel cell (50) to a refrigerant line of the cooling/heating unit (60) so as to raise the temperature of a refrigerant.

2. The cooling/heating apparatus as set forth in claim 1, wherein the refrigerant heating unit is configured to supply the waste heat to a suction-side refrigerant line (67) connected to the suction side of the compressor (61).

3. The cooling/heating apparatus as set forth in claim 2, wherein the refrigerant heating unit includes:
a cooling water line (54) to transfer the heat recovered from the fuel cell (50); and
a heat accumulation tank (53) to transfer the heat, supplied via the cooling water line (54), to the suction-side refrigerant line (67) connected to the suction side of the compressor (61).

4. The cooling/heating apparatus as set forth in claim 3, wherein the cooling water line (54) is provided with a temperature sensor (56) and a flow rate sensor (57) to measure the temperature and flow rate of cooling water, respectively, and is also provided with a cooling water pump (55) to circulate the cooling water and a flow-rate control valve (58) to adjust the flow rate of the cooling water.

5. The cooling/heating apparatus as set forth in claim 3, wherein the heat accumulation tank (53) is connected to a line (59) which receives the heat transferred via the cooling water line (54) and supplies the heat to a heat demand unit.

6. The cooling/heating apparatus as set forth in claim 3, wherein the suction-side refrigerant line (67), connected to the suction side of the compressor (61), is provided with a bypass line (68) and a valve unit (69) to cause the refrigerant to bypass the heat accumulation tank (53).

7. The cooling/heating apparatus as set forth in claim 1, further comprising:
a hydrogen modifying unit (150) to supply hydrogen to the fuel cell (50); and
a refrigerant heating unit for the hydrogen modifying unit (150) which supplies waste heat recovered from the hydrogen modifying unit (150) to a suction-side refrigerant line (167) connected to the suction side of the compressor (61) included in the cooling/heating unit (60).

8. The cooling/heating apparatus as set forth in claim 7, wherein the refrigerant heating unit for the hydrogen modifying unit (150) includes:
a cooling water line (154) to transfer the heat recovered from the hydrogen modifying unit (150); and
a heat accumulation tank (153) to transfer the heat, supplied via the cooling water line (154), to the suction-side refrigerant line (167) connected to the suction side of the compressor (61).

9. The cooling/heating apparatus as set forth in claim 8, wherein the cooling water line (154) is provided with a temperature sensor (156) and a flow rate sensor (157) to measure the temperature and flow rate of cooling water, respectively, and is also provided with a cooling water pump (155) to circulate the cooling water and a flow-rate control valve (158) to adjust the flow rate of the cooling water.

10. The cooling/heating apparatus as set forth in claim 8, wherein the heat accumulation tank (153) for the hydrogen modifying unit (150) is connected to a line (159) which receives the heat transferred via the cooling water line (154) and supplies the heat to a heat demand unit.

11. The cooling/heating apparatus as set forth in claim 8, wherein the suction-side refrigerant line (167), connected to the suction side of the compressor (61), is provided with a bypass line (168) and a valve (169) to cause the refrigerant to bypass the heat accumulation tank (153).
